# EUROPÄISCHE PATENTANMELDUNG

(11) **EP 4 675 040 A1**
(43) Veröffentlichungstag der Anmeldung: **07.01.2026**
(21) Anmeldenummer: 25187191.9
(22) Anmeldetag: 03.07.2025
(51) Int. Cl.: D21G 1/00, D21G 1/02, D21G 9/00

(54) **VERFAHREN ZUM BETRIEB EINES KALANDERS**

(30) Priorität: 03.07.2024 DE 102024118862
(71) Anmelder: TROESTER GmbH & Co. KG, 30519 Hannover (DE)
(72) Erfinder: Lange, Stefan, 31135 Hildesheim (DE); Hoffmann, Wieland, 30539 Hannover (DE)
(74) Vertreter: Scheffler, Jörg

(57) **Zusammenfassung**

Die Erfindung betrifft ein Verfahren zum Betrieb eines Kalanders umfassend wenigstens eine Walzenanordnung (1) mit zumindest zwei Walzen (2), wobei zwischen jeweils zwei Walzen (2) der Walzenanordnung (1) ein Walzenspalt (3) ausgebildet ist und hierbei eine Ist-Dicke einer durch den Kalander bearbeiteten Materialbahn (4) auf eine Soll-Dicke gesteuert und/oder geregelt wird. Hierbei ist wenigstens eine der Walzen (2) als eine Hülsenwalze (5) mit einem Walzenkern (6) und einer auf dem Walzenkern (6) angeordneten Hülse (7) ausgebildet, wobei zumindest nach einem Anordnen einer Hülse (7) auf dem Walzenkern (6) wenigstens einmalig die Ist-Dicke der Materialbahn (4) und/oder eine Ist-Weite des Walzenspalts (3) in Korrelation zur Winkelstellung der Hülsenwalze (5) über wenigstens eine Umdrehung der Hülsenwalze (5) erfasst wird.

## Beschreibung

Die Erfindung betrifft ein Verfahren zum Betrieb eines Kalanders, wobei der Kalander wenigstens eine Walzenanordnung mit zumindest zwei Walzen umfasst. Dabei ist zwischen jeweils zwei Walzen der Walzenanordnung ein Walzenspalt ausgebildet und eine Ist-Dicke einer durch den Kalander bearbeiteten Materialbahn wird auf eine Soll-Dicke gesteuert und/oder geregelt.

Die Veredelung einer Materialbahn durch die Erzeugung eines Profils kann durch verschiedene Verfahren erreicht werden, wobei der Einsatz eines Kalanders eine effektive Methode darstellt. Eine gängige Technik, um ein Profil mittels eines Kalanders auf eine Materialbahn zu übertragen, besteht darin, eine Profilwalze zu verwenden. Diese Walze ist mit einem bestimmten Muster oder Profil auf ihrer Oberfläche versehen, das beim Kontakt mit der Materialbahn übertragen wird. In diesem Prozess können verschiedene Profile erzeugt werden, um den Anforderungen verschiedener Endprodukte gerecht zu werden.

Es fällt hierbei auf, dass jedoch oft nur geringe Mengen einer Materialbahn mit einem erzeugten Muster benötigt werden und es eher üblich ist, dass beispielsweise während eines Arbeitstags oder einer Schicht Materialbahnen mit zahlreichen sich voneinander unterscheidenden Muster erzeugt werden müssen. Dies bedingt jedoch einen zeitaufwändigen Austausch der Profilwalze je nach angefordertem Muster.

So ist es aus der DE 487 616 C bekannt, in einem dreh- und einstellbaren Rahmen mehrere Profilwalzen anzuordnen, von denen die jeweils gewünschte Profilwalze durch Drehen des Rahmens mit einer feststehenden Kalanderwalze in Eingriff zu bringen, um eine schnellere Auswechslung der Profilwalze zu ermöglichen. Die Anordnung mehrerer Profilwalzen in einem drehbaren Rahmen bringt jedoch einen sehr hohen Bauraumbedarf. Wie bei der Verwendung einzelner, auszutauschender Profilwalzen erfordert die Anordnung ebenso das grundsätzliche Vorhandensein mehrerer solcher vollständigen Profilwalzen.

Um diese Problematik zu adressieren, ist bereits eine Lösung im Stand der Technik bekannt. In diesem Zusammenhang beschreibt die DE 40 28 831 A1 einen Kalander mit einer Profilwalze, welche aus einem Walzenkern und einer auf den Walzenkern aufgeschobenen Profilhülse besteht, sodass lediglich noch diese Profilhülse und nicht mehr die vollständige Profilwalze auszutauschen ist. Der Austausch einer Profilhülse erfolgt dabei in der Regel derart, dass die Profilhülse von dem Walzenkern zur Seite hin abgezogen und anschließend eine andere Profilhülse auf den Walzenkern aufgeschoben wird.

Eine derartige Ausgestaltung bedingt folglich jedoch ein Spiel zwischen dem Walzenkern und der Profilhülse, wobei regelmäßig zwischen Walzenkern und Profilhülse zudem eine Schmierschicht aufgebracht ist, um das Aufschieben und Abziehen der Profilhülse zu vereinfachen. Darüber hinaus sind Vorkehrungen notwendig, die Profilhülse am Walzenkern zu arretieren, wofür z. B ein Klauensystem ausgeführt sein kann. Die Schmierschicht und/oder eine Arretierungsvorrichtung wie ein solches Klauensystem, insbesondere in Kombination mit vorhandenen Fertigungstoleranzen, können jedoch dazu führen, dass die Profilhülse azentrisch auf dem Walzenkern sitzt, sodass, insbesondere periodische Dickenschwankungen in einer über eine solche Profilwalze profilierten Materialbahn auftreten.

Zur Herstellung von Materialbahnen mit einer über die Materialbahn äußerst präzisen Dicke gibt die DE 10 2012 224 295 A1 eine Kalandriereinrichtung sowie ein Verfahren zu deren Betrieb wieder. Die Kalandriereinrichtung umfasst dabei zwei Walzen mit Achsen, welche jeweils beidseitig gelagert sind und zwischen denen ein Spalt ausgebildet ist. Die Dicke einer durch die Walzen behandelten Materialbahn, beispielsweise eine mit einem Nassbeschichtungsverfahren hergestellte Elektrode einer Lithium-Ionen-Batterie, wird zudem an mindestens zwei über die Breite der Materialbahn verteilten Messpositionen ermittelt und in Abhängigkeit der ermittelten Dicke der Materialbahn bei mindestens einer Walze die Positionen der Lager verschoben. Das Verschieben der Lager erfolgt dabei entlang zwei verschiedener Raumrichtungen, sodass neben dem Einstellen einer Soll-Spaltbreite auch eine Verdrehung und/oder Parallelverschiebung der Walzen korrigiert werden.

Auch die EP 39 96 164 A1 beschreibt ein Verfahren zur Bearbeitung einer Materialbahn, hierbei eines Elektrodenbands mittels eines Kalanders, der aus drei übereinander angeordneten Walzen besteht. Während eines ersten Kalandervorgangs wird hierbei das Elektrodenband gemäß einer vorgegebenen Soll-Dicke verdichtet und während des zweiten Kalandervorgangs der Spalt zwischen der zweiten und der dritten Walze so eingestellt, dass Ungleichmäßigkeiten in der Dicke des Elektrodenbands ausgeglichen werden. Hierfür weist der Kalander ein Ultraschall-Messgerät auf, mittels dessen an mindestens drei über die Breite des Elektrodenbands zueinander beabstandeten Stellen die Dicke des Elektrodenbands ermittelt wird.

Darüber hinaus geht aus der DE 10 2008 015 371 A1 eine Profilregulierung für einen Mehrfachwalzenkalander aufweisend einen oder mehrere Walzenstapel hervor, wobei ein jeweiliger Walzenstapel zumindest zwei Walzen umfasst. Hierbei wird von der Problematik ausgegangen, dass jeder Profilierwalzenspalt eine eigene Profilregulierung aufweist, ein Messprofil einer Materialbahn jedoch von einer gemeinsamen Messvorrichtung stammt, welche nach dem letzten Profilierwalzenspalt positioniert ist. Hierbei erreichen die Profilregulierungen für die Profilierwalzenspalte schnell Grenzwerte, wobei das Profil der Bahn noch im Soll-Bereich liegt, die Regelungen jedoch die Fehler der anderen Regelungen durch entgegengesetzte Profile kompensiert haben, sodass die in einer extremen Position befindlichen Regelungen nicht mehr auf Änderungen reagieren können. Deswegen wird für jeden Profilierwalzenspalt eine rasche getrennte Regelung vorgesehen und ein Profilierwalzenspalt als sogenannter Referenz-Profilierwalzenspalt gewählt. Der Wert für das Lastprofil dieses Referenz-Profilierwalzenspalts wird in kleinen Schritten auf die Lastprofile der anderen Profilierwalzenspalte kopiert. Der Referenz-Profilierwalzenspalt ist vorteilhaft der erste Profilierwalzenspalt eines Kalanders in Laufrichtung der Bahn, weil dieser Profilierwalzenspalt die größte Wirkung auf das Profil der Bahn ausübt.

Vor diesem Hintergrund liegt der Erfindung die Aufgabe zugrunde, ein Verfahren der eingangs genannten Art derart auszuführen, sodass sich dieses zum Bearbeiten von Materialbahnen durch einen Kalander mit einer Profilwalze eignet.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren zum Betrieb eines Kalanders vorgesehen, wobei der Kalander wenigstens eine Walzenanordnung mit - jeweils - zumindest zwei Walzen umfasst und dabei zwischen jeweils zwei Walzen der Walzenanordnung ein Walzenspalt ausgebildet ist. Darüber hinaus ist wenigstens eine der Walzen als eine Hülsenwalze mit einem Walzenkern und einer auf dem Walzenkern angeordneten Hülse, insbesondere einer Profilhülse, ausgebildet. Nach dem erfindungsgemäßen Verfahren wird zudem eine Ist-Dicke einer durch den Kalander bearbeiteten Materialbahn auf eine Soll-Dicke gesteuert und/oder geregelt, wobei respektive wofür zumindest nach einem Anordnen einer Hülse auf dem Walzenkern wenigstens einmalig die - laufende - Ist-Dicke der Materialbahn und/oder eine - laufende - Ist-Weite des Walzenspalts erfasst wird. Das Erfassen der Ist-Dicke der Materialbahn und/oder der Ist-Weite des Walzenspalts erfolgt dabei in Abhängigkeit der und/oder in Korrelation zur - jeweiligen - Winkelstellung, insbesondere zur - jeweiligen - Absolutwinkelstellung der Hülsenwalze über wenigstens eine - vollständige - Umdrehung der Hülsenwalze. Durch dieses Erfassen der Ist-Dicke und/oder der Ist-Weite in Korrelation zur Winkelstellung der Hülsenwalze lässt sich vorteilhaft ein Zusammenhang eines azentrischen Sitzes der Hülse auf dem Walzenkern und die dadurch beim Bearbeiten der Materialbahn auftretenden qualitativen und/oder quantitativen Auswirkungen auf die Dicke der Materialbahn bestimmen und/oder ausgleichen.

In einer überaus vorteilhaften Weiterbildung der Erfindung wird aus der erfassten, insbesondere laufenden Ist-Dicke der Materialbahn und/oder der erfassten, insbesondere laufenden Ist-Weite des Walzenspalts zumindest ein Ist-Profil der Materialbahn und/oder eine, insbesondere aus dem Ist-Profil abgeleitete Änderung des Ist-Profils erfasst und/oder bestimmt. Im Speziellen kann hierbei das Ist-Profil und/oder die Änderung des Ist-Profils zumindest eines mit wenigstens einer Umdrehung der Hülsenwalze korrelierenden Bahnabschnitts der Materialbahn erfasst und/oder bestimmt werden. Durch das Erfassen und/oder Bestimmen des Ist-Profils und/oder der Änderung des Ist-Profils der Materialbahn wird es ermöglicht, die Ist-Dicke der Materialbahn bzw. eines Bahnabschnitts auch ohne eine aufwändige Regelschleife auf eine Soll-Dicke zu steuern oder eine, insbesondere vorrausschauende Regelung zu implementieren, über welche gegebenenfalls vorliegende Verzögerungs- und/oder Totzeitglieder zumindest teilweise, bevorzugt gar vollständig kompensiert werden können. Dies kann hierbei dadurch ermöglicht werden, da sich die laufende Ist-Weite des Walzenspalts aufgrund der vorhandenen Exzentrizität der Hülsenwalze in Abhängigkeit von deren Winkelstellung nach einem Anordnen der Hülse auf dem Walzenkern nicht oder nur geringfügig verändert.

So ist in einer weiteren, insbesondere auf der vorstehenden Weiterbildung aufbauenden, Ausführungsform der Erfindung einerseits vorgesehen, dass das Ist-Profil und/oder die Änderung des Ist-Profils - ausschließlich - einmalig, insbesondere nach einem Anordnen einer Hülse auf dem Walzenkern erfasst und/oder bestimmt wird. Hierdurch lässt sich der Messsowie Steuerungs- und/oder Regelungsaufwand deutlich minimieren und dennoch die Ist-Dicke respektive das Ist-Profil der Materialbahn und/oder eines Bahnabschnitts mit geringen Toleranzen auf eine Soll-Dicke und/oder ein Soll-Profil einstellen.

Andererseits ist in einer von der vorstehenden Ausführungsform abweichenden Weiterbildung der Erfindung angedacht, dass das Ist-Profil und/oder die Änderung des Ist-Profils kontinuierlich erfasst und/oder bestimmt wird. Zwar steigert sich hierdurch der Mess-, Steuerungs- und/oder Regelaufwand, jedoch kann durch das kontinuierliche Bestimmen des Ist-Profils und/oder der Änderung des Ist-Profils auch auf eine im stetigen Verlauf des Bearbeitens der Materialbahn gegebenenfalls auftretende Veränderung des Sitzes der Hülse auf dem Walzenkern und/oder andere die Ist-Dicke der Materialbahn beeinflussende Faktoren reagiert werden.

Darüberhinausgehend ist eine Weiterbildung der Erfindung als vorteilhaft anzusehen, bei welcher die - laufende - Soll-Dicke und/oder zumindest ein, insbesondere aus der - laufenden - Soll-Dicke bestimmtes, Soll-Profil der Materialbahn, über zumindest ein das Ist-Profil kompensierendes und/oder zumindest teilweise aus dem Ist-Profil bestimmtes Stellprofil für die Walzenanordnung gesteuert und/oder geregelt wird. Im Speziellen wird dabei über das Stellprofil eine Soll-Dicke und/oder ein Soll-Profil zumindest eines mit wenigstens einer Umdrehung der Hülsenwalze korrelierenden Bahnabschnitts der Materialbahn gesteuert und/oder geregelt. Das Stellprofil kann hierbei aus einem - ausschließlich - einmalig oder auch aus einem kontinuierlich bestimmten und/oder erfassten Ist-Profil bestimmt werden. Weiterhin wäre das Stellprofil hierbei zum Kompensieren des Ist-Profils im Wesentlichen als ein Negativ des Ist-Profils und/oder komplementär zum Ist-Profils ausgestaltet, sodass das Ist-Profil folglich in Amplitude und/oder Phase kompensiert würde. Das Soll-Profil wäre dabei entsprechend durch eine insbesondere laufende, konstante Soll-Dicke charakterisiert. Denkbar ist es darüber hinaus jedoch, dass das Soll-Profil von einer konstanten Soll-Dicke abweicht, wobei das Soll-Profil der Materialbahn je nach Anforderung im Grunde beliebig ausgestaltet sein kann. Hierfür wäre ein das Ist-Profil kompensierender Anteil des Stellprofils mit einem das Soll-Profil endausbildenden Anteil des Stellprofils zu überlagern. Bei einer entsprechenden Steuerung und/oder Regelung über das Stellprofil entspricht das Ist-Profil abgesehen von einer gegebenenfalls auftretenden Steuer- und/oder Regelabweichung folglich dem Soll-Profil.

Des Weiteren lässt sich eine vielversprechende Ausbildung der Erfindung darin erkennen, dass ein, insbesondere aus der Soll-Dicke bestimmtes, Soll-Profil für eine jeweilige der sich gegenüberliegenden, insbesondere unmittelbar durch die Walzen ausgeformten Seiten der Materialbahn über jeweils ein das jeweilige Ist-Profil einer Seite kompensierendes und/oder aus dem jeweiligen Ist-Profil bestimmtes Stellprofil für die Walzen der Walzenanordnung, entsprechend seitenspezifisch getrennt gesteuert und/oder geregelt wird. Hierbei wird demnach für jede der beiden - flächigen - Seiten der Materialbahn, welche durch unmittelbaren Kontakt der Walzen ausgeformt und/oder strukturiert werden, jeweils ein Ist-Profil und somit insgesamt zwei Ist-Profile erfasst und/oder bestimmt. Zum Kompensieren des Ist-Profils einer jeweiligen Seite der Materialbahn wird zudem in Abhängigkeit des jeweiligen Soll-Profils der Seite jeweils ein, insbesondere seitenspezifisches Stellprofil bestimmt und das jeweilige Ist-Profil über das jeweilige Stell-Profil auf das jeweilige Soll-Profil geregelt. Hierdurch wird in vorteilhafter Weise eine feine granulierte Abstimmung auf die Walzen der Walzenanordnung ermöglicht.

Im Rahmen einer die Erfindung im Allgemeinen, jedoch bevorzugt im Zusammenhang mit den beiden vorstehenden Weiterbildungen ausgestaltenden Ausführungsform ist darüber hinaus vorgesehen, dass das Stellprofil der Walzenanordnung durch Einstellen, z. B. Steuern und/oder Regeln, der, insbesondere laufenden, d. h. sich verändernden Ist-Weite des Walzenspalts auf eine, insbesondere laufende, Soll-Weite und/oder eine, insbesondere laufende, Ist-Friktion zwischen Materialbahn und Walzenanordnung auf eine, insbesondere laufende, Soll-Friktion bereitgestellt wird. Zum Einstellen der Ist-Weite des Walzenspalts ist vorgesehen, dass wenigstens eine der Walzen einer Walzenanordnung, d. h. die Hülsenwalze und/oder die weitere mit der Hülsenwalze zusammenwirkende Walze, verstellbar ausgeführt ist. Die Verstellbarkeit ist hierbei wenigstens normal zur Ebene der Materialbahn ausgebildet. Darüber hinaus ist auch eine Verstellbarkeit parallel zur Ebene der Materialbahn denkbar. Über das Einstellen der Ist-Weite des Walzenspalts wird dabei eine vorteilhaft einfache Möglichkeit realisiert, das Stellprofil und somit die Anpassung der Ist-Dicke und/oder des Ist-Profils der Materialbahn bereitzustellen. Zum Einstellen der Ist-Friktion zwischen der Materialbahn und der Walzenanordnung können verschiedene weitere Parameter herangezogen werden, wobei beispielsweise wenigstens einer der Parameter aus der Gruppe Temperatur der Walzenanordnung und/oder der Materialbahn, Zuführdruck und/oder -kraft auf die Materialbahn und Geschwindigkeit der Walzen der Walzenanordnung und/oder der Materialbahn Verwendung finden können.

Weiterhin liegt eine Erfolg versprechende Ausbildung der Erfindung darin, dass die - laufende - Ist-Weite, das Ist-Profil und/oder die Änderung des Ist-Profils des Walzenspalts zumindest teilweise indirekt, durch Messen einer - laufenden -Exzentrizität der Hülsenwalze über wenigstens eine Umdrehung der Hülsenwalze bestimmt wird, wobei die Exzentrizität entsprechend durch einen azentrischen Sitz der Hülse auf dem Walzenkern der Hülsenwalze bedingt ist. Dies stellt hierbei eine effiziente und zuverlässige Methode zur Überwachung des Kalandrierprozesses, hier insbesondere der Ist-Weite, des Ist-Profils und/oder der Änderung des Ist-Profils des Walzenspalts und somit der Ist-Dicke, des Ist-Profils und/oder der Änderung des Ist-Profils der Materialbahn dar. Die Exzentrizität der Hülsenwalze dient hierbei als guter Indikator für eine Änderung des Walzenspalts und folglich in der Dicke der Materialbahn. Diese Exzentrizität kann über eine einzige Umdrehung, mehrere Umdrehungen oder kontinuierlich bestimmt werden.

Eine darüber hinaus ebenso gewinnbringende Weiterbildung der Erfindung ist dadurch bestimmt, dass die, insbesondere laufende, Ist-Dicke und/oder das Ist-Profil der Materialbahn, bevorzugt über zumindest eine der Walzenanordnung in eine Transportrichtung der Materialbahn nachgelagerte Messeinrichtung erfasst wird. In vorteilhafter Weise wird dadurch die Ist-Dicke und/oder das Ist-Profil der Materialbahn direkt gemessen, wodurch im Gegensatz zu einer indirekten Messung, insbesondere über die Exzentrizität der Hülsenwalze auch Veränderungen der Materialbahn, beispielsweise aufgrund chemischer und/oder physikalischer Vorgänge, zwischen der Walzenanordnung und der Messeinrichtung erfasst und berücksichtigt werden können.

So ist es als vorteilhaft anzusehen, wenn in einer Ausgestaltung der Erfindung auch eine Laufzeit der Materialbahn zwischen dem Walzenspalt und der Messeinrichtung ermittelt wird. Gerade über die Ermittlung der Laufzeit der Materialbahn zwischen dem Walzenspalt und der Messeinrichtung besteht die Möglichkeit Veränderungen der Materialbahn, insbesondere Verformungen wie eine Stauchung respektive Schrumpfung oder eine Dehnung zu berücksichtigen, um die Ist-Dicke und/oder das Ist-Profil der Materialbahn auf die Soll-Dicke und/oder das Soll-Profil der Materialbahn zu steuern und/oder zu regeln und dabei Verzögerungs- und/oder Totzeitglieder zu kompensieren respektive eine Synchronisation der Messeinrichtung und der durch diese bestimmte Ist-Dicke mit der Änderung der Ist-Weite des Walzenspalts zu ermöglichen.

In einer Weiterbildung der Erfindung ist dabei im Speziellen angedacht, dass die Laufzeit wenigstens teilweise über die, insbesondere bekannten und/oder gemessenen, Geschwindigkeiten zumindest einer der Walzen der Walzenanordnung und/oder einer die Materialbahn aufnehmenden und/oder abtransportierenden Transporteinrichtung ermittelt wird. Die Messung der Laufzeit der Materialbahn über die Geschwindigkeiten zumindest einer der Walzen und/oder der Transporteinrichtung ist eine effiziente und kostengünstige Methode. Da diese Geschwindigkeiten bereits in den Prozess integriert und regelmäßig bekannt respektive gar vorgegeben sind, werden für gewöhnlich keine zusätzlichen Sensoren oder Messgeräte benötigt. Eine Geschwindigkeit, die hierbei zum Bestimmen der Laufzeit herangezogen werden kann, ist z. B. auch der Mittelwert aus den Geschwindigkeiten wenigstens einer der Walzen und der Geschwindigkeit der Transporteinrichtung.

Vor allem in Verbindung mit der vorstehenden Weiterbildung, jedoch ebenso in grundsätzlicher Weise, wird die Laufzeit der Materialbahn in einer Ausgestaltung des erfindungsgemäßen Verfahrens wenigstens teilweise über die, insbesondere bekannte und/oder ermittelte, Länge der Materialbahn zwischen dem Walzenspalt und der Messeinrichtung und/oder einem Längenkorrekturfaktor ermittelt. Denkbar ist hierbei einerseits, dass die Länge der Materialbahn über eine Längenmesseinrichtung erfasst wird. Andererseits besteht jedoch ebenso die Möglichkeit, die Länge der Materialbahn zwischen Walzenspalt und der Messeinrichtung zur Bestimmung der Ist-Dicke über den Umfang und eine Anzahl der Umdrehungen zumindest einer der Walzen zu ermitteln. Gerade bei einem Ermitteln der Länge der Materialbahn über zumindest eine der Walzen kann die Berücksichtigung des Längenkorrekturfaktors vonnöten sein, um etwaige Veränderungen der Länge der Materialbahn, insbesondere Verformungen, wie eine Stauchung respektive Schrumpfung oder eine Dehnung, zu berücksichtigen.

In einer zudem mit Vorteil behafteten Ausführungsform der Erfindung wird die Laufzeit der Materialbahn durch ein Versehen, insbesondere ein Anbringen und/oder Einbringen wenigstens einer Markierung in die Materialbahn und/oder einem Erfassen der wenigstens einen Markierung der Materialbahn, ermittelt. Durch das Versehen der Materialbahn mit einer Markierung und dem anschließenden Erfassen dieser Markierungen kann die Laufzeit der Materialbahn präzise ermittelt werden. Dies führt zu genauen und zuverlässigen Messergebnissen, da die Markierung als Referenzpunkt dient, um die Position der Materialbahn genau zu bestimmen. Die Verwendung von Markierungen zur Ermittlung der Laufzeit der Materialbahn stellt zudem in vorteilhafter Weise eine effiziente und zuverlässige Methode dar, da sie keine komplexen Sensoren oder Messgeräte erfordert. Denkbar ist hierbei beispielsweise, dass die Materialbahn manuell mit einer solchen Markierung versehen wird. Auch die Laufzeit als solche könnte manuell unter Zuhilfenahme einer Zeitmessvorrichtung bestimmt werden.

Eine überaus gewinnbringende Ausbildung der Erfindung liegt zudem darin begründet, dass die Markierung durch eine, insbesondere impulsartige, Veränderung der Ist-Weite des Walzenspalts in die Materialbahn eingebracht und/oder durch die Messeinrichtung zur Messung der Ist-Dicke der Materialbahn erfasst wird. Die Markierung durch eine impulsartige Veränderung der Ist-Weite des Walzenspalts einzubringen, ermöglicht hierbei eine präzise Platzierung der Markierung in die Materialbahn. Dadurch wird sichergestellt, dass die Markierung exakt an einer Soll-Stelle platziert wird, was zu genauen und zuverlässigen Messergebnissen führt, dies insbesondere in dem Zusammenhang, da der gesamte Messprozess, beispielsweise über eine Steuerung des Kalanders und bedingt durch das Erfassen der eingebrachten Markierung durch die Messeinrichtung zur Messung der Ist-Dicke der Materialbahn automatisiert ablaufen kann. Die Veränderung der Ist-Weite des Walzenspalts kann hierbei als eine Verringerung oder eine Aufweitung des Walzenspalts ausgestaltet sein.

Besonders vorteilhaft gestaltet sich eine Ausführungsform der Erfindung ferner dadurch, dass die Laufzeit der Materialbahn durch ein Erkennen der Phasenverschiebung zwischen dem Ist-Profil der Materialbahn, insbesondere zumindest eines mit einer Umdrehung der Hülsenwalze korrelierenden Bahnabschnitts der Materialbahn, und dem Stellprofil der Walzenanordnung ermittelt wird. Hierdurch lässt sich die Messung der Laufzeit mit der Messung der Ist-Dicke und/oder des Ist-Profils der Materialbahn über eine Messeinrichtung kombinieren. Auf die Durchführung zusätzlicher Messungen und eine gegebenenfalls notwendige Anordnung weiterer Messeinrichtung lässt sich so vorteilhaft verzichten.

Darüber hinaus lässt sich eine Ausbildung der Erfindung als Erfolg versprechend ansehen, wenn das Kompensieren des Ist-Profils durch Steuern und/oder Regeln des Soll-Profils über das Stellprofil anhand der ermittelten Laufzeit der Materialbahn phasenrichtig erfolgt. Derart wird eine präzise Korrektur des Ist-Profils der Materialbahn über das Stellprofil ermöglicht. Da die Korrektur phasenrichtig erfolgt, wird insbesondere sichergestellt, dass die Anpassung des Stellprofils genau zum richtigen Zeitpunkt, d. h. unter Berücksichtigung der Laufzeit der Materialbahn zwischen dem Walzenspalt und der Messeinrichtung erfolgt, um Abweichungen oder Unregelmäßigkeiten in der Materialbahn zu korrigieren.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Ansicht eines zur Durchführung des Verfahrens verwendbaren Kalanders;
- Fig. 2: ein Ist-Profil und ein Soll-Profil einer Materialbahn sowie ein zugehöriges Stellprofil einer Walzenanordnung.

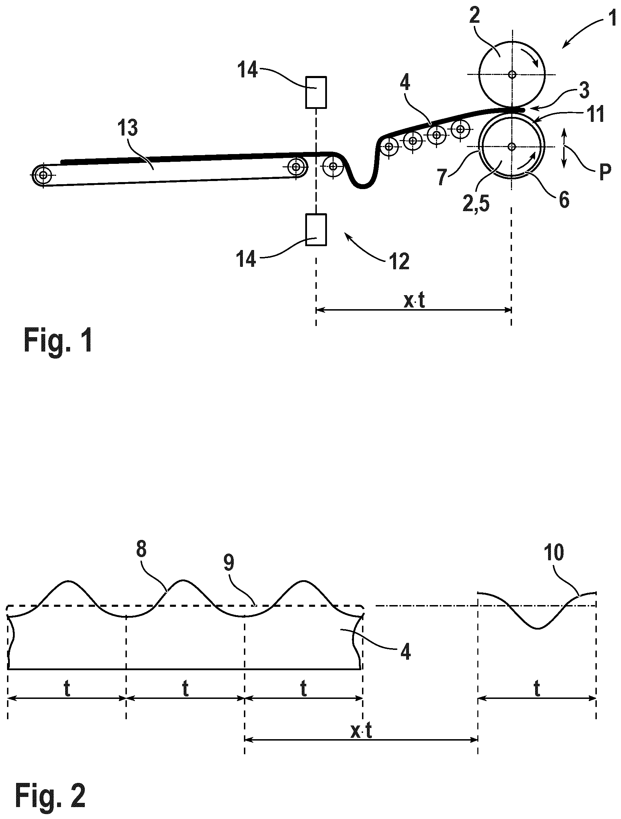

Die Figur 1 zeigt somit einen Kalander, welcher zur Durchführung des erfindungsgemäßen Verfahrens Verwendung findet. Der Kalander umfasst hierbei die Walzenanordnung 1 mit den beiden Walzen 2. Eine der Walzen 2 ist dabei als eine Hülsenwalze 5 mit dem Walzenkern 6 und der auf dem Walzenkern 6 angeordneten Hülse 7 ausgeführt, wobei zwischen den zwei Walzen 2 der Walzenanordnung 1 der Walzenspalt 3 ausgebildet ist. Wie der Figur 1 zu entnehmen ist, sitzt die Hülse 7 azentrisch auf dem Walzenkern 6, wodurch die Hülsenwalze 5 die Exzentrizität 11 aufweist. Aufgrund dieser Exzentrizität 11 würden sich beim Bearbeiten der Materialbahn 4 jedoch zu vermeidende Dickenschwankungen in der Materialbahn 4 ergeben.

Aus diesem Grund ist im Rahmen des Verfahrens vorgesehen, dass die Ist-Dicke der durch den Kalander bearbeiteten Materialbahn 4 auf eine Soll-Dicke geregelt wird, wobei nach der Ausführungsform der Figur 1 zumindest nach einem Anordnen einer Hülse 7 auf dem Walzenkern 6 wenigstens einmalig, in dieser Ausführungsform gar kontinuierlich, die Ist-Dicke der Materialbahn 4 in Korrelation zur Winkelstellung der Hülsenwalze 5 über wenigstens eine Umdrehung der Hülsenwalze 5 erfasst wird. Die Ist-Dicke der Materialbahn 4 wird dabei über die der Walzenanordnung 1 in Transportrichtung der Materialbahn 4 nachgelagerter Messeinrichtung 12 erfasst, welche hierbei zwei Messaufnehmer 14 aufweist.

Aus der erfassten Ist-Dicke der Materialbahn 4 wird zudem kontinuierlich das in Figur 2 dargestellte Ist-Profil 8 der Materialbahn 4 bestimmt. Über ein das Ist-Profil 8 kompensierendes und aus dem Ist-Profil 8 bestimmtes Stellprofil 10 für die Walzenanordnung 1 wird zudem das Soll-Profil 9 der Materialbahn 4 geregelt. Dies erfolgt dabei dadurch, dass über das Stellprofil 10 die Ist-Weite des Walzenspalts 3 laufend auf eine Soll-Weite eingestellt wird, wobei das Stellprofil 10, wie der Figur 2 im Detail zu entnehmen ist, zum Kompensieren des Ist-Profils 8 als ein Negativ des Ist-Profils 8 ausgeführt ist. Das Einstellen der Ist-Weite des Walzenspalts 3 erfolgt dabei dadurch, dass die Hülsenwalze 5 gegenüber der weiteren Walze 2 der Walzenanordnung 1 verstellbar respektive bewegbar ausgebildet ist.

Um dabei eine Synchronisation der Änderung der Ist-Weite des Walzenspalts 3 mit der Messeinrichtung 12 und der durch diese bestimmten Ist-Dicke der Materialbahn 4 zu ermöglichen respektive ein zwischen der Messung der Ist-Dicke und der Änderung der Ist-Weite vorliegenden Totzeitglied zu kompensieren und zudem eine Verformung, hier eine die Länge der Materialbahn 4 verändernde Schrumpfung der Materialbahn 4 zu berücksichtigen, wird zudem die Laufzeit der Materialbahn 4 zwischen dem Walzenspalt 3 und der Messeinrichtung 12 ermittelt. Die Laufzeit der Materialbahn 4 wird dabei in bevorzugter Weise dadurch ermittelt, dass die Materialbahn 4 mit wenigstens einer Markierung versehen wird, welche durch eine impulsartige Veränderung, insbesondere eine Verringerung der Ist-Weite des Walzenspalts 3 in die Materialbahn 4 eingebracht wird. Diese Markierung wird sodann über die Messeinrichtung 12 zur Messung der Ist-Dicke der Materialbahn 4 erfasst, wobei sich die Laufzeit durch die Zeitspanne zwischen dem Einbringen und dem Erfassen der Markierung ergibt.

Aufgrund der genannten Verformung, insbesondere Schrumpfung oder Dehnung der Materialbahn 4, gibt das in Figur 2 aufgezeigte Ist-Profil 8 die Ist-Dicke der Materialbahn 4 zwar in Korrelation zur Winkelstellung der Hülsenwalze 5 und dabei über mehrere Umdrehungen der Hülsenwalze 5, jedoch nicht in unmittelbarer, sondern lediglich mittelbarer Korrelation zum Umfang respektive zur umfänglichen Länge der Hülsenwalze 5 wieder. Die Winkelstellung der Hülsenwalze 5 ist dabei aufgrund der kontinuierlichen Drehung der Hülsenwalze 5 auch proportional zur vorliegenden Zeit t für eine solche Umdrehung, welche somit auch der Periodendauer des Ist-Profils 8 entspricht. Zwischen dem Stellprofil 10 und dem an der Messeinrichtung12 vorliegenden Ist-Profil 8 liegt dabei ein zeitlicher Versatz vor, welcher sich aus einem Vielfachen x dieser Periodendauer und somit der Zeit t für eine Umdrehung der Hülsenwalze 5 ergibt. Dieser zeitliche Versatz entspricht dabei entsprechend auch der Laufzeit der Materialbahn 4 zwischen dem Walzenspalt 3 und der Messeinrichtung 12. Das Vielfache x kann hierbei im Bereich der reellen Zahlen liegen. Anhand der ermittelten Laufzeit der Materialbahn 4 erfolgt das Kompensieren des Ist-Profils 8 durch Steuern und/oder Regeln des Soll-Profils 9 über das Stellprofil 10 phasenrichtig.

### BEZUGSZEICHENLISTE

- 1: Walzenanordnung
- 2: Walze
- 3: Walzenspalt
- 4: Materialbahn
- 5: Hülsenwalze

- 6: Walzenkern
- 7: Hülse
- 8: Ist-Profil
- 9: Soll-Profil
- 10: Stellprofil

- 11: Exzentrizität
- 12: Messeinrichtung
- 13: Transporteinrichtung
- 14: Messaufnehmer
- t: Zeit

- x: Vielzahl

## Patentansprüche

1. Verfahren zum Betrieb eines Kalanders umfassend wenigstens eine Walzenanordnung (1) mit zumindest zwei Walzen (2), wobei zwischen jeweils zwei Walzen (2) der Walzenanordnung (1) ein Walzenspalt (3) ausgebildet ist und hierbei eine Ist-Dicke einer durch den Kalander bearbeiteten Materialbahn (4) auf eine Soll-Dicke gesteuert und/oder geregelt wird, **dadurch gekennzeichnet, dass** wenigstens eine der Walzen (2) als eine Hülsenwalze (5) mit einem Walzenkern (6) und einer auf dem Walzenkern (6) angeordneten Hülse (7) ausgebildet ist, wobei zumindest nach einem Anordnen einer Hülse (7) auf dem Walzenkern (6) wenigstens einmalig die Ist-Dicke der Materialbahn (4) und/oder eine Ist-Weite des Walzenspalts (3) in Korrelation zur Winkelstellung der Hülsenwalze (5) über wenigstens eine Umdrehung der Hülsenwalze (5) erfasst wird.

2. Verfahren nach Anspruch 1, **dadurch gekennzeichnet, dass** aus der erfassten Ist-Dicke der Materialbahn (4) und/oder der erfassten Ist-Weite des Walzenspalts (3) zumindest ein Ist-Profil (8) der Materialbahn (4) und/oder eine Änderung des Ist-Profils (8) der Materialbahn (4) erfasst und/oder bestimmt wird.

3. Verfahren nach Anspruch 1 oder 2, **dadurch gekennzeichnet, dass** das Ist-Profil (8) und/oder die Änderung des Ist-Profils (8) einmalig erfasst und/oder bestimmt wird.

4. Verfahren nach zumindest einem der vorhergehenden Ansprüche, **dadurch gekennzeichnet, dass** das Ist-Profil (8) und/oder die Änderung des Ist-Profils (8) kontinuierlich erfasst und/oder bestimmt wird.

5. Verfahren nach zumindest einem der vorhergehenden Ansprüche, **dadurch gekennzeichnet, dass** die Soll-Dicke und/oder zumindest ein, insbesondere aus der Soll-Dicke bestimmtes, Soll-Profil (9) der Materialbahn (4) über zumindest ein das Ist-Profil (8) kompensierendes und/oder aus dem Ist-Profil (8) bestimmtes Stellprofil (10) für die Walzenanordnung gesteuert und/oder geregelt wird.

6. Verfahren nach zumindest einem der vorhergehenden Ansprüche, **dadurch gekennzeichnet, dass** die Soll-Dicke und/oder ein, insbesondere aus der Soll-Dicke bestimmtes, Soll-Profil (9) für eine jeweilige der sich gegenüberliegenden, insbesondere unmittelbar durch die Walzen (2) ausgeformten Seiten der Materialbahn (4), über jeweils ein das jeweilige Ist-Profil (8) einer Seite kompensierendes und/oder aus dem jeweilen Ist-Profil (8) bestimmtes Stellprofil (10) für die Walzen (2) der Walzenanordnung (1) getrennt gesteuert und/oder geregelt wird.

7. Verfahren nach zumindest einem der vorhergehenden Ansprüche, **dadurch gekennzeichnet, dass** über das Stellprofil (10) die Ist-Weite des Walzenspalts (3) auf eine Soll-Weite und/oder eine Ist-Friktion zwischen Materialbahn (4) und Walzenanordnung (1) auf eine Soll-Friktion eingestellt wird.

8. Verfahren nach zumindest einem der vorhergehenden Ansprüche, **dadurch gekennzeichnet, dass** die Ist-Weite, das Ist-Profil (8) und/oder die Änderung des Ist-Profils (8) des Walzenspalts (3) zumindest teilweise indirekt, durch Messen einer Exzentrizität (11) der Hülsenwalze (5) über wenigstens eine Umdrehung der Hülsenwalze (5) bestimmt wird.

9. Verfahren nach zumindest einem der vorhergehenden Ansprüche, **dadurch gekennzeichnet, dass** die Ist-Dicke und/oder das Ist-Profil (8) der Materialbahn (4) über zumindest eine Messeinrichtung (12) erfasst wird.

10. Verfahren nach zumindest einem der vorhergehenden Ansprüche, **dadurch gekennzeichnet, dass** eine Laufzeit der Materialbahn (4) zwischen dem Walzenspalt (3) und der Messeinrichtung (12) ermittelt wird.

11. Verfahren nach zumindest einem der vorhergehenden Ansprüche, **dadurch gekennzeichnet, dass** die Laufzeit wenigstens teilweise über die Geschwindigkeiten zumindest einer der Walzen (2) der Walzenanordnung (1) und/oder einer die Materialbahn (4) abtransportierenden Transporteinrichtung (13) ermittelt wird.

12. Verfahren nach zumindest einem der vorhergehenden Ansprüche, **dadurch gekennzeichnet, dass** die Laufzeit der Materialbahn (4) wenigstens teilweise über die Länge der Materialbahn (4) zwischen dem Walzenspalt (3) und der Messeinrichtung (12) und/oder einem Längenkorrekturfaktor ermittelt wird.

13. Verfahren nach zumindest einem der vorhergehenden Ansprüche, **dadurch gekennzeichnet, dass** die Laufzeit der Materialbahn (4) durch ein Versehen der Materialbahn (4) mit wenigstens einer Markierung und/oder einem Erfassen der wenigstens einen Markierung der Materialbahn ermittelt wird.

14. Verfahren nach zumindest einem der vorhergehenden Ansprüche, **dadurch gekennzeichnet, dass** die Markierung durch eine Veränderung der Ist-Weite des Walzenspalts (3) in die Materialbahn (4) eingebracht und/oder durch die Messeinrichtung (12) zur Messung der Ist-Dicke der Materialbahn (4) erfasst wird.

15. Verfahren nach zumindest einem der vorhergehenden Ansprüche, **dadurch gekennzeichnet, dass** die Laufzeit der Materialbahn (4) durch ein Erkennen einer Phasenverschiebung zwischen dem Ist-Profil (8) der Materialbahn und dem Stellprofil (10) der Walzenanordnung (1) ermittelt wird.

16. Verfahren nach zumindest einem der vorhergehenden Ansprüche, **dadurch gekennzeichnet, dass** das Kompensieren des Ist-Profils (8) durch Steuern und/oder Regeln des Soll-Profils (9) über das Stellprofil (10) anhand der ermittelten Laufzeit der Materialbahn (4) phasenrichtig erfolgt.
